Europäisches Patentamt

European Patent Office

Office européen des brevets

(11) Veröffentlichungsnummer: **0 254 036**

**A2**

# (12) EUROPÄISCHE PATENTANMELDUNG

(21) Anmeldenummer: 87108791.2

(22) Anmeldetag: 19.06.87

(51) Int. Cl.⁴: **B01D 53/34**

(30) Priorität: 26.06.86 DE 3621347

(43) Veröffentlichungstag der Anmeldung:
27.01.88 Patentblatt 88/04

(84) Benannte Vertragsstaaten:
AT BE CH DE FR GB IT LI LU NL SE

(71) Anmelder: Henkel Kommanditgesellschaft auf
Aktien
Postfach 1100 Henkelstrasse 67
D-4000 Düsseldorf-Holthausen(DE)

(72) Erfinder: Vier, Fritz, Dipl.-Ing.
Knipprather Strasse 62
D-4019 Monheim(DE)
Erfinder: Baumgart, Heinz, Dipl.-Ing.
von Hünefeld-Strasse 24
D-4018 Langenfeld(DE)
Erfinder: Wiese, Dietrich, Dipl.-Ing.
Schürenbruch 15
D-4955 Hille 5(DE)
Erfinder: Michalke, Robert
Lutherstrasse 14
D-4100 Duisburg 14(DE)

(74) Vertreter: Patentanwälte Meinke und
Dabringhaus Dipl.-Ing. J. Meinke Dipl.-Ing. W.
Dabringhaus
Westenhellweg 67
D-4600 Dortmund 1(DE)

(54) Verfahren und Anlage zur Verminderung des NO3-Gehaltes im Rauchgas bei kohlenstaubbefeuerten Dampferzeugern mit Trockenentaschung.

(57) Bei einem Verfahren zur Verminderung des $NO_x$-Gehaltes im Rauchgas bei der Verfeuerung von Kohlenstaub in Dampfkesselanlagen insbesondere mit Trockenentaschung, vorzugsweise in Großfeuerungsanlagen von Dampfkesseln, bei dem ein Teil der Rauchgase im Bereich der Brenner in den Feuerraum zurückgeführt und vor Eintritt in den Kessel mit Frischluft vermischt wird, soll eine Lösung geschaffen werden, die bei kohlenstaubbefeuerten Dampfkesselanlagen durch primärseitige, einen relativ geringen Platzbedarf beanspruchende und einen geringen Wirkungsgradverlust aufweisende Maßnahmen, die insbesondere eine kostengünstige Nachrüstung bestehender Anlagen ermöglichen, den $NO_x$-Gehalt in dem in die Umwelt austretenden Abgastrom weitgehend vermindert.

Dies wird dadurch erreicht, daß in wenigstens zwei übereinanderliegenden Brennerebenen die Flammenkerne in den Kernbereichen in einem unterstöchiometrischen Verhältnis zu dem jeweiligen Kohlenstaubstrom mit Primärluft beaufschlagt werden und ggf. zumischbare Frischluft und/oder rückgeführtes kaltes Rauchgas den Brennerkernbereichen zusätzlich als Sekundärluft sowie den Brennermantelbei chen als Tertiärluft derart zugeführt wird, daß sich im Bereich der unteren Brennerebene insgesamt ein nahezu stöchiometrisches Verbrennungsluftverhältnis und im Bereich der oberen Brennerebene insgesamt ein stark unterstöchiometrisches Verbrennungsluftverhältnis einstellt.

Fig 1

1a.

**"Verfahren und Anlage zur Verminderung des NOx-Gehaltes im Rauchgas bei kohlenstaubbefeuerten Dampferzeugern mit Trockenentaschung"**

Die Erfindung richtet sich auf ein Verfahren und eine Anlage zur Verminderung des NOx-Gehaltes im Rauchgas bei der Verfeuerung von Kohlenstaub in Dampfkesselanlagen insbesondere mit Trockenentaschung, vorzugsweise in Großfeuerungsanlagen von Dampfkesseln, bei dem ein Teil der Rauchgase im Bereich der Brenner in den Feuerraum zurückgeführt und vor Eintritt in den Kessel mit Frischluft vermischt wird.

Der bei der Verbrennung von fossilen Energieträgern entstehende übermäßige NOx-Gehalt im Rauchgas stellt ein akutes Umweltproblem dar, so daß versucht wird, diesen Gehalt zu vermindern. In der Bundesrepublik Deutschland fordert die sogenannte Großfeuerungsanlagenverordnung u.a. für Altanlagen mit kohlenstaubbefeuerten Dampferzeugern mit Trockenentaschung bei Kraftwerks-Feuerungswärmeleistungen bis 300 MW einen Wert von 650 mg/m$^3$ und über 300 MW einen Wert von 200mg/m$^3$.

Die meisten Altanlagen haben NOx-Emissionen, die über diesen Werten liegen. Dies ist u.a. darauf zurückzuführen, daß diese Anlagen im Hinblick auf ihre Wirtschaftlichkeit mit Luftvorwärmern ausgerüstet sind, mit deren Hilfe die im Rauchgas enthaltene Wärmemenge zum Teil auf die Verbrennungsluft übertragen und somit in den Prozeß wieder zurückgeführt wird. Bei der Verbrennung fossiler Energieträger mit auf ca. 300°C vorgewärmter Luft entsteht aber bei Einsatz konventioneller Brenner besonders viel NOx.

Eine Verminderung des NOx-Gehaltes in dem in die Umwelt gelangenden Abgasstrom kann grundsätzlich durch direkte Maßnahmen an der Feuerung, sogenannte Primärmaßnahmen, oder durch nachgeschaltete Rauchgasreinigungsanlagen, sogenannte Sekundärmaßnahmen, erreicht werden.

Im Unterschied zu Gasfeuerungen, in denen durch Oxidation des Luftstickstoffs nur sogenanntes thermisches NOx gebildet wird, entsteht bei einer Kohlenstaubfeuerung bis zu 60 % des NOx-Ausstoßes aus brennstoffeigenem Stickstoff.

Um die Bildung von NOx aus brennstoffeigenem Stickstoff weitgehend zu unterdrücken, ist es bekannt, die Verfeuerung von Kohlenstaub bei unterstöchiometrischen Verbrennungsluftverhältnissen durchzuführen. Nachteilig bei einer derartigen unterstöchiometrischen Fahrweise ist die sehr stark vermehrte CO-Bildung, welche die Gefahr von CO-Korrosionsschäden an den Kessel- bzw. Feuerraumwänden erheblich vergrößert.

Darüber hinaus ist es bekannt, daß bei einem Vorhandensein von reduzierenden Rauchgasbestandteilen, wie CO, H$_2$ und ggf. Kohlenwasserstoffradikalen bereits gebildetes NOx wieder zerlegt wird.

Aufgabe der Erfindung ist die Schaffung einer Lösung, die bei kohlenstaubbefeuerten Dampfkesselanlagen durch primärseitige, einen relativ geringen Platzbedarf beanspruchende und einen geringen Wirkungsgradverlust aufweisende Maßnahmen, die insbesondere eine kostengünstige Nachrüstung bestehender Anlagen ermöglichen, den NOx - Gehalt in dem in die Umwelt austretenden Abgasstrom weitgehend vermindert.

Beim Verfahren der eingangs bezeichneten Art wird diese Aufgabe gemäß der Erfindung dadurch gelöst, daß in wenigstens zwei übereinanderliegenden Brennerebenen die Flammenkerne in den Brennerkernbereichen in einem unterstöchiometrischen Verhältnis zu dem jeweiligen Kohlenstaubstrom mit Primärluft beaufschlagt werden und ggf. zumischbare Frischluft und/oder rückgeführtes kaltes Rauchgas den Brennerkernbereichen zusätzlich als Sekundärluft sowie den Brennermantelbereichen als Tertiärluft derart zugeführt wird, daß sich im Bereich der unteren Brennerebene insgesamt ein nahezu stöchiometrisches Verbrennungsluftverhältnis und im Bereich der oberen Brennerebene insgesamt ein stark unterstöchiometrisches Verbrennungsluftverhältnis einstellt.

Durch das erfindungsgemäße Verfahren kann in dem in die Umwelt austretenden Abgasstrom ein so geringer NOx-Gehalt eingestellt werden, daß ggf. allein durch die erfindungsgemäßen primärseitigen Maßnahmen die Grenzwerte der Großfeuerungsanlagenverordnung eingehalten werden können. Insbesondere ist das erfindungsgemäße Verfahren für die Nachrüstung bestehender Anlagen geeignet, da es konstruktiv einfache und relativ wenig Platz beanspruchende Maßnahmen vorsieht, aufgrund der relativ geringen rückgeführten Rauchgasmenge keinen stark ins Gewicht fallenden Wirkungsgradverlust aufweist und daher kostengünstig mit einem verhältnismäßig geringen Investitionsaufwand erstellbar ist.

Der geringe NOx-Gehalt im Rauchgas wird bei dem erfindungsgemäßen Verfahren durch die vorteilhafte Kombination verschiedener Maßnahmen erreicht. Zunächst wird durch die unterstöchiometrische Betriebsweise der Flammenkerne in den Brennerkernbereichen und die zusätzlich zugeführte Sekundärluft - ggf. zumischbare Frischluft und/oder rückgeführtes kaltes Rauchgas - erreicht, daß in den Brennerkernbereichen verhältnismäßig wenig thermisches $NO_x$ entsteht. Zur Nachverbrennung wird den Brennermantelbereichen dann Tertiärluft - ein Gemisch aus rückgeführtem kaltem Rauchgas und zugemischter Frischluft - zugeführt, wobei durch das rückgeführte kalte Rauchgas eine verzögerte Nachverbrennung bei einer relativ tiefen Flammentemperatur erzielt wird. Neben diesem Wirkungsmechanismus, durch eine unterstöchiometrische zweistufige Verbrennung bei möglichst niedriger Flammentemperatur die thermische $NO_x$-Bildung weitgehend zu unterdrücken, wird aber auch eine Pyrolyse-und Vergasungsreaktion der Kohlepartikel bewirkt. Hierbei werden die sogenannten Flüchtigen freigesetzt, die zum Teil den Brennstoff-Stickstoff enthalten. Diese thermischen Reaktionsprodukte der Kohle gehen anschließend chemische Reaktionen ein, wobei u.a. atomarer Stickstoff entsteht. Dieser trifft auf ein geringes Sauerstoffangebot, so daß sich auch aus dem Brennstoff-Stickstoff nur vergleichsweise wenig $NO_x$ bildet.

Ferner wird durch die Einstellung unterschiedlicher Verbrennungsluftverhältnisse in der unteren und der oberen Ebene erreicht, daß in der unteren Ebene eine zweistufige, aber bereits möglichst weitgehende Verbrennung des Kohlenstaubstromes erfolgt, wobei trotz der zweistufigen Fahrweise aufgrund örtlicher Temperaturspitzen $NO_x$ gebildet werden kann, und daß in der oberen Brennerebene aufgrund der insgesamt stark unterstöchiometrischen Fahrweise bei einer geringen $NO_x$-Bildungsrate reduzierende Pyrolysebestandteile wie CO, $H_2$ und Kohlenwasserstoffradikale entstehen, die zu einer Reduktion der insbesondere in der unteren Brennerebene bereits entstandenen $NO_x$-Moleküle führen.

Zur Ergänzung der Reduktionswirkung der oberen Brennerebene und zur Sicherstellung einer vollständigen Nachverbrennung sieht die Erfindung in Weiterbildung vor, daß zusätzlich oberhalb der oberen Brennerebene Reduktionsgas in den Feuerraum eingedüst und oberhalb der Reduktionsgaseindüsung ein weiterer Luftstrom insbesondere kalter Luft, als Oberluft in den Feuerraum eingeblasen wird. Unter kalter Luft ist hierbei der Umgebung einer nach dem erfindungsgemäßen Verfahren arbeitenden Anlage entnommene Frischluft, die nicht einem etwaigen Luftvorwärmer zugeführt wird, zu verstehen.

In Ausgestaltung sieht die Erfindung vor, daß den Brennerkernbereichen als Sekundärluft je Ebene ein unterschiedliches und den Mantelbereichen als Tertiärluft je Ebene ein gleiches Gemisch aus rückgeführtem kaltem Rauchgas und Frischluft zugeführt wird, wobei die Sekundärluft für die obere Brennerebene ggf. nur aus rückgeführtem Rauchgas besteht. Diese Maßnahme ist zur Einstellung der unterschiedlichen Verbrennungsluftverhältnisse in den Verbrennungsebenen besonders zweckmäßig.

Eine vorteilhafte Rauchgasführung ergibt sich, wenn ein erster Teilstrom des rückgeführten Rauchgases nach Frischluftzumischung den Brennermantelbereichen zugeführt, ein zweiter Teilstrom des rückgeführten Rauchgasstromes stromabwärts eines Luftvorwärmers in den Frischluftstrom der Sekundärluft für die Brennerkernbereiche eingedüst und ein dritter Teilstrom des rückgeführten Rauchgases stromabwärts einer Verzweigung der Sekundärluftzufuhr für die untere und die obere Brennerebene in das Gemisch aus zweitem Teilstrom rückgeführten Rauchgases und Frischluft eingedüst wird, wie es die Erfindung in weiterer Ausgestaltung vorsieht.

Zweckmäßig ist es hierbei, wenn dem ersten Teilstrom rückgeführten Rauchgases zur Bildung des Tertiärluftgemisches entweder kalte, vor dem Luftvorwärmer abgezweigte und/oder warme, hinter dem Luftvorwärmer abgezweigte Frischluft zugemischt wird, da hierdurch auf einfache Weise die Temperatur dieses zuzuführenden Gasgemisches und damit letztendlich die Flammentemperatur in den Brennerebenen zu beeinflussen ist.

In weiterer Ausgestaltung sieht die Erfindung vor, daß 15 - 30 %, insbesondere 27%, des den Kessel verlassenden Rauchgases rückgeführt und in den ersten Teilstrom 5 -10%, insbesondere 8%, des rückgeführten Rauchgases abgezweigt, in den zweiten Teilstrom 5 - 15 %, insbesondere 11 %, des rückgeführten Rauchgases abgezweigt und in den dritten Teilstrom 5 - 10%, insbesondere 8%, des rückgeführten Rauchgases abgezweigt werden, wobei der erste Teilstrom mit 15 - 25%, insbesondere 22%, der insgesamt zuzuführenden Frischluft zur Bildung der Tertiärluft vermischt und der zweite Teilstrom stromabwärts des Luftvorwärmers in einen 30 - 40%, insbesondere 33 %, der gesamten Frischluftzufuhr umfassenden Frischluftstrom eingedüst wird.

Um für eine ggf. notwendige Kohlenstaubaufbereitung und/oder die Zufuhr des Kohlenstaubes in die Brennerebenen ein geeignetes Transportmedium bereitstellen zu können, sieht die Erfindung in Weiterbildung vor, daß vor und hinter dem Luftvorwärmer weitere Frischluftströme abgezweigt werden, die mit dem Kohlenstaub den Flammenkernen als Primärluft zugeführt werden.

Für die Erzielung einer guten Wirkung des zugeführten Reduktionsgases und zur Verhinderung von CO-Korrosionen an den Feuerraumwänden sieht die Erfindung in vorteilhafter Ausgestaltung vor, daß als Reduktionsgas oberhalb der oberen Brennerebene Erdgas mit hoher Geschwindigkeit in den Feuerraum eingedüst und ein von dem oberhalb der Reduktionsgaseindüsung als Oberluft einzublasenden Luftstrom abzweigender Teilstrom im Bereich der oberen Brennerebenen als Schleierluft in den Feuerraum eingeblasen wird.

In besonders vorteilhafter Weise kommt die Wirkung des erfindungsgemäßen Verfahrens auf die $NO_x$-Absenkung im Abgasstrom zur Geltung, wenn die Schleierluft aus allen Seitenwänden des Kessels in den Feuerraum eingeblasen wird, die übrigen Medien dem Feuerraum aber nur über die Brennerfrontwand zugeführt werden.

Besonders vorteilhafte Verbrennungs-und Reduktionsverhältnisse stellen sich dadurch ein, daß in der unteren Brennerebene ein Verbrennungsluftverhältnis von = 0,9 - 1,1, insbesondere = 1,0, und in der oberen Brennerebene ein Verbrennungsluftverhältnis von = 0,5 - 0,8, insbesondere = 0,6, eingestellt wird, wie dies die Erfindung in weiterer Ausgestaltung vorsieht.

Für den Fall, daß mehr als zwei Brennerebenen übereinanderangeordnet sind, sieht die Erfindung vor, daß bei mehr als zwei übereinanderliegenden Brennerebenen diese wirkmäßig entweder zu einer unteren und einer oberen Brennerebene oder jeweils zwei direkt übereinanderliegende Brennerebenen zu einer unteren und einer oberen Brennerebene zusammengeschaltet werden, wobei das Verbrennungsluftverhältnis zumindest tendenziell von einer nahezu stöchiometrischen Betriebsweise in der unteren ersten Brennerebene ausgehend zu der oberen letzten hin kleiner wird.

Ist die Anzahl der Brennerebenen nicht auf zwei beschränkt, läßt sich die Wirkungsweise des erfindungsgemäßen Verfahrens durch Variation der Frischluft/Rauchgas-Verhältnisse insbesondere in den Sekundärluftströmen zu den einzelnen Brennerebenen um so feiner einstellen, je größer die Zahl der Brennerebenen ist.

Zur Lösung der obigen Aufgabe sieht die Erfindung eine Anlage vor, die sich durch einen Feuerraum mit mindestens zwei übereinanderliegenden Brennerebenen, eine Abzweigleitung für einen Teil-Rauchgasstrom, eine Leitung für einen ersten Teilstrom rückgeführten Rauchgases, die in eine Mischkammer mündet, eine Leitung für einen Teil-Frischluftstrom, die ebenfalls in die Mischkammer mündet, eine Leitung, die das Gemisch aus der Mischkammer als Tertiärluft den Mantelbereichen der Brenner in den Brennerebenen zuführt, eine Leitung für einen zweiten Teilstrom rückgeführten Rauchgases, die in eine Eindüsung zur Beaufschlagung von erwärmter Frischluft mit rückgeführtem Rauchgas mündet, die in einer Leitung für vorgewärmte Frischluft angeordnet ist, und eine sich in eine Leitung für die obere Brennerebene und eine Leitung für die untere Brennerebene verzweigende Leitung, die die Eindüsung mit den Brennerkernbereichen verbinden, wobei in der Leitung für die obere Brennerebene eine weitere Eindüsung angeordnet ist, in welche eine Leitung für einen dritten Teilstrom rückgeführten Rauchgases einmündet, auszeichnet.

Zur Durchführung einer zweckmäßigen Luftzuführung in den Mantelbereichen sieht die Erfindung in Ausgestaltung vor, daß für die Tertiärluftzufuhr in den Mantelbereichen der Brenner konzentrisch um jeden Brenner Düsenrohre angeordnet sind.

In Weiterbildung weist die Anlage eine Reduktionsgasleitung, die über Eindüsungen oberhalb der oberen Brennerebene in den Feuerraum einmündet, eine Luftleitung, die über Eindüsungen oberhalb der Reduktionsgaseindüsungen in den Feuerraum einmündet sowie eine Frischluftleitung, die im Bereich der oberen Brennerebene über weitere Eindüsungen in den Feuerraum einmündet, auf.

Besonders vorteilhaft für die Durchführung des erfindungsgemäßen Verfahrens ist es, wenn ringsum in den Seitenwänden des Feuerraumes Eindüsungen für Frischluft und nur in der Brennerfrontwand Brenner und Eindüsungen für Tertiärluft, Reduktionsgas und Frischluft angeordnet sind, wie es die Erfindung in Ausgestaltung vorsieht.

Um Einflußnahmen auf die Temperaturführung im Feuerraum und die Rauchgaskaminverluste durchführen zu können, ist es vorteilhaft, daß die Luftleitungen durch Leitungen mit einer Frischluftleitung und/oder durch Leitungen mit der Leitung für vorgewärmte Frischluft verbunden sind sowie die Leitung für einen Teil-Frischluftstrom durch eine Leitung mit der Leitung für vorgewärmte Frischluft und/ oder durch eine Leitung mit der Frischluftleitung verbunden ist, wie es die Erfindung in weiterer Ausgestaltung vorsieht.

Zur Versorgung der Leitung, die den Brennerkernbereichen Kohlenstaub sowie Luft zuführt, sieht die Erfindung in zweckmäßiger Weiterbildung vor, daß die Anlage eine Abzweigleitung von der Frischluftleitung und/oder eine Abzweigleitung von der Leitung für vorgewärmte Frischluft zur zumindest teilweisen Versorgung einer den Brennerkernbereichen Kohlenstaub sowie Primärluft zuführenden Leitung mit Primärluft aufweist.

Um die Nachverbrennung möglichst vollständig zu bewirken, sind die Tertiärluft-, Oberluft-und Schleierluft-Ströme mit hohem Impuls der Einzelströme in den Feuerraum einzuführen, so daß die Erfindung in weiterer Ausgestaltung vorsieht, daß in der Leitung für Tertiärluft und der Leitung für die Ober-und Schleierluft Druckerhöhungsgebläse angeordnet sind.

Schließlich ist die erfindungsgemäße Anlage auch durch am Ende der Luftleitung im Bereich des Feuerraumes ringsum in den Feuerraumwänden angeordnete und die weiteren Eindüsungen bildende Perforationsbänder gekennzeichnet.

Die Erfindung ist nachstehend anhand der Zeichnung beispielsweise näher erläutert. Diese zeigt in

Fig. 1 ein Prinzipschaltbild einer Anlage zur Durchführung des Verfahrens und in

Fig. 2 eine schematische Teilansicht der Brennerfrontwand des Feuerraumes einer Anlage zur Durchführung des Verfahrens.

Im Feuerraum 1 ist die Brennerfrontwand 2 eines insgesamt mit 3 bezeichneten Kessels mit vier Kohlenstaubbrennern 4,5,6 und 7 ausgerüstet, die in zwei übereinanderliegenden Brennerebenen - der oberen Brennerebene 8 und der unteren Brennerebene 9 - angeordnet sind. Des weiteren sind in der Brennerfrontwand 2 in den Mantelbereichen 10 der Brenner 4,5,6,7 konzentrisch um jeden Brenner 4,5,6,7 Düsenrohre 11 sowie Reduktionsgaseindüsungen 12, Eindüsungen 13 und weitere Eindüsungen 14 angeordnet. Die Eindüsungen 14 sind im Bereich der oberen Brennerebene 8 in der Brennerfrontwand 2 und auch ringsum in den übrigen Feuerraumwänden vorhanden. Es möge sich bei dem Kessel 3 um einen kohlenstaubbefeuerten Dampfkessel mit Trockenentaschung handeln.

Abgasseitig weist der Kessel 3 eine Rauchgasleitung 15 auf, die Rauchgase einem Luftvorwärmer 16 zuführt: Von dem Luftvorwärmer 16 aus werden die Rauchgase über eine Leitung 17 einem Elektrofilter 18 zu - und dann über einen Kamin 19 in die Umwelt abgeführt. Durch kleine Pfeile ist hierbei, wie auch bei den übrigen Leitungen dieser Figur, die Strömungsrichtung des jeweiligen Mediums angegeben. Zwischen dem Kamin 19 und dem Elektrofilter 18 ist ein Saugzug 20 angeordnet.

Zur Versorgung der Brenner 4,5,6,7 mit Frischluft wird über ein Gebläse 21 Frischluft angesaugt und über eine Leitung 22 dem Luftvorwärmer 16 zugeführt, von dem aus die Frischluft in der Leitung 23 für vorgewärmte Frischluft weitergeführt wird.

Als vorgewärmte Frischluft, wird in dieser Beschreibung die durch einen Luftvorwärmer geführte Frischluft nach erfolgter Wärmeübernahme bezeichnet. Ansonsten ist von Frischluft bzw. kalter Frischluft die Rede, welche dann Umgebungstemperatur aufweist. Analog wird das durch den Luftvorwärmer geführte Rauchgas nach erfolgter Wärmeabgabe als kaltes Rauchgas bezeichnet.

Von der Rauchgasleitung 17 zweigt eine Abzweigleitung 24 ab, in deren Verlauf ein Staubabscheider 25 und ein Gebläse 26 angeordnet sind. Stromabwärts des Gebläses 26 verzweigt sich die Abzweigleitung 24 in eine Leitung 27 für einen ersten Teilstrom rückgeführten Rauchgases, die in eine Mischkammer 28 mündet, eine Leitung 29 für einen zweiten Teilstrom rückgeführten Rauchgases, die in eine Eindüsung 30 mündet, sowie eine Leitung 31 für einen dritten Teilstrom rückgeführten Rauchgases, die in eine Eindüsung 32 einmündet.

In die Mischkammer 28 mündet eine Leitung 33 für einen Teil-Frischluftstrom, die über eine Leitung 34 mit der Leitung 23 für vorgewärmte Frischluft und der Leitung 35 mit der Frischluftleitung 22 in Verbindung steht. Die Zufuhr von Frischluft in die Leitung 33 kann derart erfolgen, daß der Leitung 33 durch die Leitung 34 entweder nur vorgewärmte Frischluft oder durch die Leitung 35 nur kalte Frischluft oder aber bei Öffnung beider Leitungen ein Gemisch aus vorgewärmter und kalter Frischluft zugeführt wird.

Aus der Mischkammer 28 gelangt das Gemisch durch eine Leitung 36 in die Düsenrohre 11 in den Mantelbereichen 10 der Brenner 4,5,6,7, wo dieses Gemisch als sogenannte Tertiärluft in den Feuerraum 1 eingeblasen wird. In der Leitung 36 ist ein Druckerhöhungsgebläse 37 angeordnet.

Durch die Eindüsung 30 wird ein Teil-Rauchgasstrom in die Leitung 23 für vorgewärmte Frischluft eingedüst und dieses Gemisch durch die sich in eine Leitung 38 für die obere Brennerebene und eine Leitung 39 für die untere Brennerebene verzweigende Leitung 40 den Brennerkernbereichen als Sekundärluft zugeführt. Dabei ist die den Leitungen 38 und 39 jeweils zuzuführende Teil-Rauchgasmenge mittels nicht näher dargestellter Regelorgane steuerbar, so daß ggf. das gesamte durch die Leitung 40 geführte Gasgemisch der Leitung 39 zugeführt werden kann und der Leitung 38 dann nur über die darin angeordnete Eindüsung 32 durch die Leitung 31 ein Teil-Rauchgasstrom zugeführt wird.

Bei dem in den Leitungen 24, 27, 29, 31 rückgeführten Rauchgas handelt es sich um sogenanntes kaltes Rauchgas, weil es stromabwärts des Luftvorwärmers 16 von der Rauchgasleitung 17 abgezweigt wird.

Den Eindüsungen 12 wird durch eine Reduktionsgasleitung 41 Erdgas zugeführt. Die hier eingedüste Erdgasmenge trägt mit bis zu 10 % zu der für die Feuerungswärmeleistung des Kessels benötigten Brennstoffmenge bei.

Die Eindüsungen 13 sind zur Einblasung von sogenannter Oberluft mittels einer Luftleitung 42 und die weiteren Eindüsungen 14 zur Einblasung von sogenannter Schleierluft mittels einer Frischluftleitung 43 mit einer Leitung 44, in der ein Druckerhöhungsgebläse 45 angeordnet ist, verbunden. Stromaufwärts des Druckerhöhungsgebläses 45 mündet in die Leitung 44 eine Abzweigleitung 46, die über eine Leitung 47 mit der Frischluftleitung 22 und über eine Leitung 48 mit der Leitung 23 für vorgewärmte Frischluft in Verbindung steht. Die Luftzufuhr in die Leitung 46 kann derart geregelt werden, daß entweder durch die Leitung 47 nur Frischluft von der Frischluftleitung 22 oder durch die Leitung 48 nur vorgewärmte Frischluft aus der Leitung 23 oder ein Gemisch aus Frischluft und vorgewärmter Frischluft oder gar keine Luft zugeführt wird. Im letztere Fall wird die Leitung 44 dann durch die Leitung 49 mit Luft versorgt.

Durch eine sich verzweigende Leitung 50 wird den Kernbereichen der Brenner 4,5,6,7 Kohlenstaub und Primärluft zugeführt.

In der Frischluftleitung 22 ist eine als Pfeil angedeutete Abzweigleitung 51 und in der Leitung 23 für die vorgewärmte Frischluft ist eine ebenfalls als Pfeil angedeutete Abzweigleitung 52 angeordnet, die beide in hier nicht näher dargestellter Weise in die Leitung 50 einmünden.

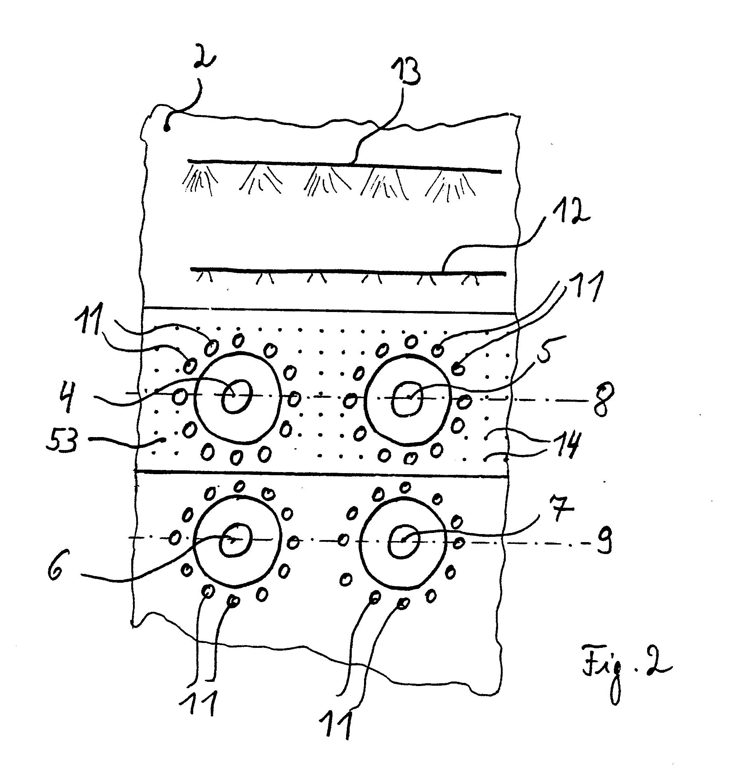

Ringsum im Bereich des Feuerraumes 1 in den Feuerraumwänden des Kessels 3 angeordnete Perforationsbänder 53 bilden die Eindüsungen 14, über die ein Teilluftstrom als sogenannte Schleierluft in den Feuerraum 1 eingedüst wird. Die Teilansicht der Brennerfrontwand nach Fig. 2 gibt diese Anordnung* schematisch für den Bereich der Brennerfrontwand wieder. Im Verhältnis zu dem durch die Leitung 42 über die Eindüsungen 13 als sogenannte Oberluft in den Feuerraum 1 eingedüsten Luftstrom ist der durch die Leitung 43 eingedüste Luftstrom möglichst gering zu halten.

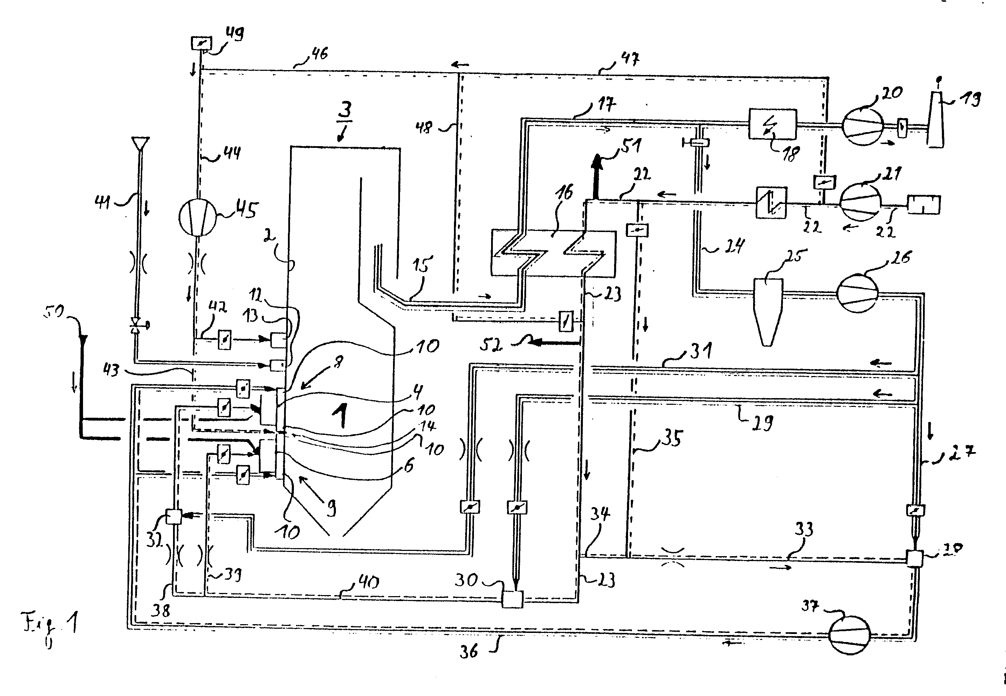

Darüber hinaus zeigt die Figur 1 in nicht unbedingt ausreichender Anzahl in verschiedenen Leitungen noch andeutungsweise verschiedene Stell-, Regel-und Durchflußmeßeinrich tungen, die hier nicht näher bezeichnet werden. Auf diese kommt es im Rahmen der vorliegenden Erfindung nicht an.

In der unteren Brennerebene möge in dem Ausführungsbeispiel durch eine entsprechende Einstellung des Frischluft/Rauchgasverhältnisses ein Verbrennungsluftverhältnis von λ 0,9 - 1,1 und in der oberen Brennerebene ein Verbrennungsluftverhältnis von λ = 0,5 - 0,8 eingestellt sein.

Natürlich ist das beschriebene Ausführungsbeispiel in vielfacher Hinsicht abänderbar, ohne den Grundgedanken der Erfindung zu verlassen. Beispielsweise ist das hier dargestellte Verfahren nicht nur für kohlenstaubbefeuerte Kesselanlagen mit Frontfeuerung, sondern auch für Ecken-bzw. Boxerfeuerungen in gleicher Weise anwendbar. Ggf. kann auch die kalte Ober- und/oder Schleierluft durch vorgewärmte Luft ersetzt werden. In modifizierter Art ist das Verfahren auch auf Schmelzkammerkessel anwendbar.

Ferner ist es insbesondere in Abhängigkeit von der Ausbildung und Anordnung des Elektrofilters 18 u. a. auch möglich, die Abzweigleitung 24 zwischen dem Kamin 19 und dem Saugzug 20 abzweigen zu lassen, wobei ggf. auf den Staubabscheider 25 verzichtet werden kann.

**Ansprüche**

1. Verfahren zur Verminderung des $NO_x$-Gehaltes im Rauchgas bei der Verfeuerung von Kohlenstaub in Dampfkesselanlagen insbesondere mit Trockenentaschung, vorzugsweise in Großfeuerungsanlagen von Dampfkesseln, bei dem ein Teil der Rauchgase im Bereich der Brenner in den Feuerraum zurückgeführt und vor Eintritt in den Kessel mit Frischluft vermischt wird, dadurch gekennzeichnet, daß in wenigstens zwei übereinanderliegenden Brennerebenen die Flammenkerne in den Brennerkernbereichen in einem unterstöchiometrischen Verhältnis zu dem jeweiligen Kohlenstaubstrom mit Primärluft beaufschlagt werden und ggf. zumischbare Frischluft und/oder rückgeführtes kaltes Rauchgas den Brennerkernbereichen zusätzlich als Sekundärluft sowie den Brennermantelbereichen als Tertiärluft derart zugeführt wird, daß sich im Bereich der unteren Brennerebene insgesamt ein nahezu stöchiometrisches Verbrennungsluftverhältnis und im Bereich der oberen Brennerebene insgesamt ein stark unterstöchiometrisches Verbrennungsluftverhältnis einstellt.

2. Verfahren nach Anspruch 1, dadurch gekennzeichnet, daß zusätzlich oberhalb der oberen Brennerebene Reduktionsgas in den Feuerraum eingedüst und oberhalb der Reduktions gaseindüsung ein weiterer Luftstrom insbesondere kalter Luft, als Oberluft in den Feuerraum eingeblasen wird.

3. Verfahren nach Anspruch 1, dadurch gekennzeichnet, daß den Brennerkernbereichen als Sekundärluft je Ebene ein unterschiedliches und den Brennermantelbereichen als Tertiärluft je Ebene ein gleiches Gemisch aus rückgeführtem kaltem Rauchgas und Frischluft zugeführt wird, wobei die Sekundärluft für die obere Brennerebene ggf. nur aus rückgeführtem Rauchgas besteht.

4. Verfahren nach Anspruch 3, dadurch gekennzeichnet, daß ein erster Teilstrom des rückgeführten Rauchgases nach Frischluftzumischung den Brennermantelbereichen zugeführt, ein zweiter Teilstrom des rückgeführten Rauchgasstromes stromabwärts eines Luftvorwärmers in den Frischluftstrom der Sekundärluft für die Brennerkernbereiche eingedüst und ein dritter Teilstrom des rückgeführten Rauchgases stromabwärts einer Verzweigung der Sekundärluftzufuhr für die untere und die obere Brennerebene in das Gemisch aus zweitem Teilstrom rückgeführten Rauchgases und Frischluft eingedüst wird.

5. Verfahren nach einem der vorangehenden Ansprüche,
dadurch gekennzeichnet,
daß dem ersten Teilstrom rückgeführten Rauchgases zur Bildung des Tertiärluftgemisches entweder kalte, vor dem Luftvorwärmer abgezweigte und/oder warme, hinter dem Luftvorwärmer abgezweigte Frischluft zugemischt wird.

6. Verfahren nach einem der vorangehenden Ansprüche,
dadurch gekennzeichnet,
daß 15 - 30 %, insbesondere 27 %, des den Kessel verlassenden Rauchgases rückgeführt und in den ersten Teilstrom 5 -10 %, insbesondere 8 %, des rückgeführten Rauchgases abgezweigt, in den zweiten Teilstrom 5 - 15 %, insbesondere 11 %, des rückgeführten Rauchgases abgezweigt und in den dritten Teilstrom 5 - 10 %, insbesondere 8 %, des rückgeführten Rauchgases abgezweigt werden, wobei der erste Teilstrom mit 15 - 25 %, insbesondere 22 %, der insgesamt zuzuführenden Frischluft zur Bildung der Tertiärluft vermischt und der zweite Teilstrom stromabwärts des Luftvorwärmers in einen 30 - 40 %, insbesondere 33 %, der gesamten Frischluftzufuhr umfassenden Frischluftstrom eingedüst wird.

7. Verfahren nach einem der vorangehenden Ansprüche,
dadurch gekennzeichnet,
daß vor und hinter dem Luftvorwärmer weitere Frischluftströme abgezweigt werden, die mit dem Kohlenstaub den Flammenkernen als Primärluft zugeführt werden.

8. Verfahren nach einem der vorangehenden Ansprüche,
dadurch gekennzeichnet,
daß als Reduktionsgas oberhalb der oberen Brennerebene Erdgas mit hoher Geschwindigkeit in den Feuerraum eingedüst und ein von dem oberhalb der Reduktionsgaseindüsung als Oberluft einzublasenden Luftstrom abzweigender Teilstrom im Bereich der oberen Brennerebene als Schleierluft in den Feuerraum eingeblasen wird.

9. Verfahren nach einem der vorangehenden Ansprüche,
dadurch gekennzeichnet,
daß die Schleierluft aus allen Seitenwänden des Kessels in den Feuerraum eingeblasen wird, die übrigen Medien dem Feuerraum aber nur über die Brennerfrontwand zugeführt werden.

10. Verfahren nach einem der vorangehenden Ansprüche,
dadurch gekennzeichnet,
daß in der unteren Brennerebene ein Verbrennungsluftverhältnis von $\lambda$ = 0,9 bis 1,1, insbesondere $\lambda$ = 1,0, und in der oberen Brennerebene ein Verbrennungsluftverhältnis von $\lambda$ = 0,5 bis 0,8, insbesondere $\lambda$ = 0,6, eingestellt wird.

11. Verfahren nach einem der vorangehenden Ansprüche,
dadurch gekennzeichnet,
daß bei mehr als zwei übereinanderliegenden Brennerebenen diese wirkmäßig entweder zu einer unteren und einer oberen Brennerebene oder jeweils zwei direkt übereinanderliegende Brennerebenen zu einer unteren und einer oberen Brennerebene zusammengeschaltet werden, wobei das Verbrennungsluftverhältnis zumindest tendenziell von einer nahezu stöchiometrischen Betriebsweise in der unteren ersten Brennerebene ausgehend zu der oberen letzten hin kleiner wird.

12. Anlage, insbesondere zur Durchführung des Verfahrens nach einem der vorangehenden Ansprüche,
gekennzeichnet durch
einen Feuerraum (1) mit mindestens zwei übereinanderliegenden Brennerebenen (8,9), eine Abzweigleitung (24) für einen Teil-Rauchgasstrom, eine Leitung (27) für einen ersten Teilstrom rückgeführten Rauchgases, die in eine Mischkammer (28) mündet, eine Leitung (33) für einen Teil-Frischluftstrom, die ebenfalls in die Mischkammer (28) mündet, eine Leitung (36), die das Gemisch aus der Mischkammer (28) als Tertiärluft den Mantelbereichen (10) der Brenner (4,5,6,7) in den Brennerebenen (8,9) zuführt, eine Leitung (29) für einen zweiten Teilstrom rückgeführten Rauchgases, die in eine Eindüsung (30) zur Beaufschlagung von erwärmter Frischluft mit rückgeführtem Rauchgas mündet, die in einer Leitung (23) für vorgewärmte Frischluft angeordnet ist, und eine sich in eine Leitung (38) für die obere Brennerebene und eine Leitung (39) für die untere Brennerebene verzweigende Leitung (40), die die Bindüsung (30) mit den Brennerkernbereichen verbinden, wobei in der Leitung (38) für die obere Brennerebene eine weitere Eindüsung (32) angeordnet ist, in welche eine Leitung (31) für einen dritten Teilstrom rückgeführten Rauchgases einmündet.

13. Anlage nach einem der vorangehenden Ansprüche,
dadurch gekennzeichnet,

daß für die Tertiärluftzufuhr in den Mantelbereichen (10) der Brenner (4,5,6,7) konzentrisch um jeden Brenner (4,5,6,7) Düsenrohre (11) angeordnet sind.

14. Anlage nach Anspruch 11,

gekennzeichnet durch

eine Reduktionsgasleitung (41), die über Eindüsungen (12) oberhalb der oberen Brennerebene (8) in den Feuerraum (1) einmündet, eine Luftleitung (42), die über Eindüsungen (13) oberhalb der Reduktionsgaseindüsungen (12) in den Feuerraum (1) einmündet sowie eine Frischluftleitung (43), die im Bereich der oberen Brennerebene (8) über weitere Eindüsungen (14) in den Feuerraum (1) einmündet.

15. Anlage nach einem der vorangehenden Ansprüche,

dadurch gekennzeichnet,

daß ringsum in den Seitenwänden des Feuerraumes (1) Eindüsungen (14) für Frischluft und nur in der Brennerfrontwand (2) Brenner (4,5,6,7) und Eindüsungen (11,12,13,14) für Tertiärluft, Reduktionsgas und Frischluft angeordnet sind.

16. Anlage nach einem der vorangehenden Ansprüche,

dadurch gekennzeichnet,

daß die Luftleitungen (42,43) durch Leitungen (44,46,47 ) mit einer Frischluftleitung (22) und/oder durch Leitungen (44,46,48) mit der Leitung (23) für vorgewärmte Frischluft verbunden sind sowie die Leitung (33) für einen Teil-Frischluftstrom durch eine Leitung (34) mit der Leitung (23) für vorgewärmte Frischluft und/oder durch eine Leitung (35) mit der Frischluftleitung (22) verbunden ist.

17. Anlage nach einem der vorangehenden Ansprüche,

dadurch gekennzeichnet,

daß sie eine Abzweigleitung (51) von der Frischluftleitung (22) und/oder eine Abzweigleitung (52) von der Leitung (23) für vorgewärmte Frischluft zur zumindest teilweisen Versorgung einer den Brennerkernbereichen Kohlenstaub sowie Primärluft zuführenden Leitung (50) mit Primärluft aufweist.

18. Anlage nach einem der vorangehenden Ansprüche,

dadurch gekennzeichnet,

daß in der Leitung (36) für die Tertiärluft und der Leitung (44) für die Ober-und Schleierluft Druckerhöhungsgebläse (37,45) angeordnet sind.

19. Anlage nach einem der vorangehenden Ansprüche,

gekennzeichnet durch

am Ende der Luftleitung (43) im Bereich des Feuerraumes (1) ringsum in den Feuerraumwänden des Kessels (3) angeordnete und die weiteren Eindüsungen (14) bildende Perforationsbänder (53).

Fig. 1

Fig. 2